# EUROPEAN PATENT SPECIFICATION

(11) **EP 3 243 622 B1**
(45) Date of publication and mention of the grant of the patent: **09.09.2020**
(21) Application number: 16169647.1
(22) Date of filing: 13.05.2016
(51) Int. Cl.: B29B 9/06, B29B 9/12, B29B 9/16, F26B 17/00

(54) **PROCESS FOR HYDRAULIC CONVEYING OF POLYOLEFIN PELLETS**
VERFAHREN ZUM HYDRAULISCHEN TRANSPORTIEREN VON POLYOLEFINPELLETS
PROCÉDÉ DE TRANSPORT HYDRAULIQUE DE GRANULÉS DE POLYOLÉFINE

(43) Date of publication of application: 15.11.2017
(73) Proprietor: Borealis AG, 1220 Vienna (AT)
(72) Inventor: Räsänen, Jukka, 06750 Tolkkinen (FI); Zitting, Samuli, 04300 Tuusula (FI); Sleijster, Henry, 6101ES Echt (NL); Bergstra, Michiel, 2600 Berchem (BE); Vijay, Sameer, 4020 Linz (AT)
(74) Representative: Kador & Partner PartG mbB

(56) References cited:
- WO-A2-2011/087729
- DE-A1- 10 048 923
- DE-A1- 19 729 302
- US-A1- 2004 209 082
- US-A1- 2010 124 607
- US-A1- 2011 245 445

## Description

### Field of the Invention

The present invention is directed to a method of transporting polyolefin pellets by hydraulic conveying. The present invention improves the flow properties of the pellets, makes transportation of pellets easy and simplifies the blending of pellet lots.

### Problem to Be Solved

A pneumatic conveying system is typically used for transportation of polyolefin pellets. Drawback of this system is attrition of pellets which leads to formation of polymer dust. The dust reduces the final product quality and may create safety problems, e.g. explosions, fires and pluggages are possible.

In addition, certain soft olefin copolymers, such as polyolefin elastomers and plastomers, for instance polyethylenes having a density of 915 kg/m³ or less and propylene copolymers having a fraction of xylene soluble polymer at 25 °C of at least 25 % and up to 60 % or even more, have a problem that the pellets made of the polymer tend to adhere to each other during the transport and storage. Also, it is possible that so called angel hair and streamers are formed during pellet conveying. This often causes problems in downstream process steps, such as blending, storage and packaging. Agglomeration may also occur with homopolymers, but it is not as severe as with copolymers.

EP-A-1132435 discloses coating compositions comprising finely divided silicic acid with large BET surface. The powdery composition was dispersed, for instance, in water. The coatings could be applied to various substrates, such as metal substrates, like automotive bodies. EP-A-2277941 discloses that the flowability of pellets made of a sticky polymer could be improved by adding a binder to the pellets and tumbling the pellets with an antiblock. The antiblock could be, for instance, siloxane which was used in an amount of 0.2 % by weight. US 2010/124607 A1 discloses that pellets made of a sticky polymer were dusted with an antiblock composition in water suspension. Exemplified antiblock compositions were polyethylene, calcium stearate and bisstearamide wax. The pellets and antiblock agent were contacted at temperatures of at least 25 °C.

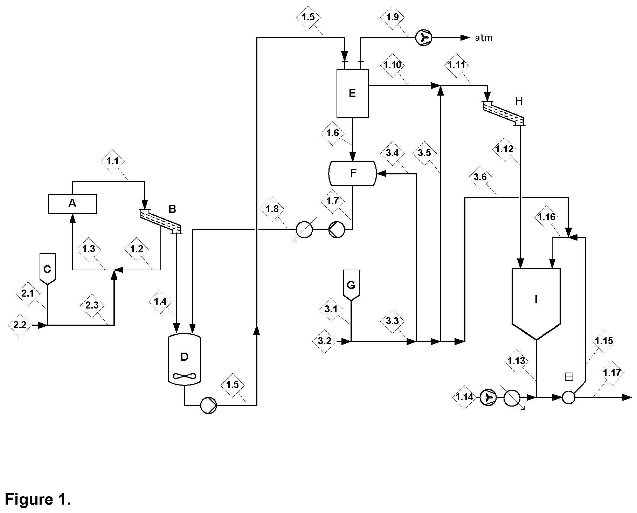

WO-A-2012/131458 discloses that an antiblock agent was added in an amount of from 1 to 15 % by weight into pellets made from elastomeric polymers. The antiblock was inorganic filler, such as magnesium sulphate, titanium hydroxide, calcium hydroxide, silica and others. The two examples disclose the addition of the antiblocking agent into the extruder. Figure 1 discloses the addition of the antiblock into the dewatering step when the elastomer is recovered from the polymerisation reactor.

US-A-2013/317193 discloses free-flowing, agglomeration resistant amorphous poly-alpha-olefin based adhesive pellets. The pellets are prepared by extruding through a die plate and cutting the adhesive into pellets in a cooling fluid and then recrystallizing the pellets at a temperature range of 25 to 40 °C for at least 30 minutes and finally separating the pellets from the recrystallization fluid.

EP-A-0410914 discloses that pourable particles of normally soft and tacky plastic materials are formed by extruding the material into contact with a cooling fluid containing a non-sticky material, cutting the material into particles, separating the particle from the cooling fluid and finally contacting the particles with a second non-sticky material. Polyethylene wax powder was used in the inventive examples.

US-A-4769289 discloses polar ethylene interpolymers which are free-flowing. Polymer extrudates are coated with fumed silica (0.001-2 w-%).

DE-A-19906496 discloses a hydraulic conveying system for pellets.

Schmidt, H. J.: Hydraulic Conveying of Plastic Pellets. ANTEC 2004, Conference proceedings, Society of Plastics Engineers, Chicago, May 2004 compares pneumatic conveying of plastic pellets with hydraulic conveying of plastic pellets. The hydraulic conveying system is operated at 60 °C.

US 2011/245445 A1 discloses a process for the treatment of plastic material, e.g. in the form of pellets, comprising a) providing a liquid such as water; b) contacting the plastic material with the liquid; c) keeping the plastic material in the liquid at Tb-25° C to Tb of the liquid, wherein Tb is the boiling point of the liquid at the applied pressure; and d) removing the plastic material from the liquid.

In spite of the above-mentioned disclosures there still remains a need for a simple and economical process which overcomes the problem of agglomeration of pellets and streamers formation during the transport and storage. Prior art teaches that hydraulic conveying of pellets reduces the problems related to traditional pneumatic conveying of pellets but there still remains problems with temperatures used in hydraulic conveying. According to Schmidt, H. J.: Hydraulic Conveying of Plastic Pellets. ANTEC 2004, Conference proceedings, Society of Plastics Engineers, Chicago, May 2004, a typical operating temperature is 60°C. Also in hot climate areas problems may arise unless the temperature of the hydraulic conveying system is controlled. Even though the prior art suggests using antiblock agents in polyolefin pellets, they are normally used together with a binder, like in EP-A-2277941, which leads to a complicated process. The present invention provides a simple and economical conveying method for plastic pellets which reduces formation of agglomerates and streamers. The present invention also provides a process where antiblock is homogeneously distributed on the surface of the pellets thereby additionally improving their handling properties. The present invention also provides a process for an easy and gentle pellet homogenisation.

### Summary of the Invention

The present invention provides a process according to claim 1 for hydraulic conveying of pellets of polyolefins, comprising the steps of: (i) extruding molten polyolefin into strands and cutting the strands into pellets in an underwater pelletiser (A); (ii) withdrawing a first pellet suspension stream from the underwater pelletiser (A); (iii) concentrating the first pellet suspension stream in a first pellet separator (B) thereby producing a concentrated pellet stream and a first water stream substantially free of pellets and passing the first water stream back to the underwater pelletiser (A); (iv) passing the concentrated pellet stream to a hydraulic conveying line (1.5) through a first vessel (D) and mixing it with water thereby producing a second pellet suspension stream; (v) withdrawing the second pellet suspension stream from the first vessel (D) and passing it to a second pellet separator (E); (vi) separating the pellets from water in the second pellet separator (E) thereby creating a second water stream and a dry pellet stream and passing the second water stream back to the first vessel (D); characterised in that the polyolefin is a copolymer of ethylene having a density of 915 kg/m³ or less, measured according to ISO 1183-1:2004 Method A on compression moulded specimen prepared according to EN ISO 1872-2 (Feb 2007), and in that any one of (1) the first pellet suspension stream, (2) the second pellet suspension stream or (3) the dry pellet stream comprises an antiblock, wherein the antiblock is silica. Optionally, the above process further comprises a step (vii) of passing the dry pellet stream to a blender or to a classifier.

### Description of Drawings

Figure 1 shows a hydraulic conveying system for plastic pellets and possible feeding places for the addition of an antiblock.
Figure 2 shows an exemplary flow diagram for blending of a pellet lot in presence of water.
Figure 3 shows a drawing of a silo where the flow experiments were done.
Figure 4 shows the results of flow experiments conducted with silica treated and untreated pellets.

### Detailed Description

### The olefin copolymer

The present method involves the production of copolymers of ethylene. Such copolymers comprise an ethylene monomer and at least one olefin comonomer.

The ethylene copolymer comprises at least 50 % by mole of units derived from the ethylene monomer, based on all the monomeric units in the copolymer. Preferably, the ethylene copolymer comprises from 70 to 95 % by mole, more preferably from 80 to 95 % by mole of units derived from the ethylene monomer, based on all the monomeric units in the copolymer. The comonomer is preferably an alpha-olefin having from 2 to 10 carbon atoms and which is different from the etyhlene monomer. More preferably the comonomer is then an alpha-olefin having from 2 to 8 carbon atoms and which is different from the ethylene monomer. The alpha-olefin comonomer is especially preferably selected from the group consisting of 1-butene, 1-hexene, 1-octene and mixtures thereof.

The comonomer can also be a polyene, such as a diene or a triene. Suitable examples of polyene comonomers are 7-methyl-1,6-octadiene, 1,7-octadiene, 1,9-decadiene, 1,5-hexadiene, and 5-vinyl-2-norbornene.

The comonomer may also be a cyclic olefin such as norbornene, dihydro-dicyclopentadiene, phenyl norbornene or etracyclododecene.

In addition, the comonomer can be a mixture of two or more of the above-described compounds.

### Polymerisation process

The ethylene copolymer can be produced in the presence of a polymerisation catalyst in any suitable polymerisation process, such as slurry, gas phase or solution. The polymerisation may be carried out in one, two or several stages and if the polymerisation is done in more than one stage, a combination of different polymerisation processes may be used. For instance, a multistage ethylene polymerisation process, where first step is conducted in slurry and second step in gas phase, is disclosed in WO-A-92/12182.

It is especially preferred to produce the ethylene copolymer in solution polymerisation process. In said preferred solution polymerisation process the monomer is polymerised at a temperature in which the polymer is dissolved in the solvent mixture which is present in the process. The preferred polymerisation is carried out in a completely liquid-filled vessel under adiabatic or semi adiabatic conditions. As it is well known in the art when the polymerisation reactor is operated in adiabatic conditions the reactor is not cooled but the temperature is only influenced by the heat of the reaction and temperatures of the raw material feeds. In semi-adiabatic operation the reactor contents may be cooled by using a heat exchanger or a cooling jacket, but the heat withdrawn by the cooling system is substantially smaller than the heat generated by polymerisation.

Typically the preferred polymerisation is conducted at a temperature of from about 115 °C to 250 °C, such as 118 to 140 °C, depending on the melting temperature of the polymer being produced. The pressure is typically from 1 to 200 bar. The residence time is short, typically less than 10 minutes. Such processes are disclosed, among others, in WO-A-1997/036942, WO-A-2006/083515, WO-A-2008/082511, and WO-A-2009/080710.

The process includes one or more polymerisation reactors. Suitable reactors include unstirred or stirred, spherical, cylindrical and tank-like vessels and recirculating loop reactors and tubular reactors. Such reactors typically include injection points for monomer, comonomer, solvent, catalyst and optional other reactants and additives and withdrawal point for polymer solution. In addition the reactors may include heating or cooling means.
In solution polymerisation process a solvent is present. The solvent is in liquid or supercritical state in the polymerisation conditions. The solvent is typically and preferably a hydrocarbon solvent, such as a liquid hydrocarbon solvent. The liquid hydrocarbon solvent used is preferably a C₅₋₁₂-hydrocarbon which may be unsubstituted or substituted by C₁₋₄ alkyl group such as pentane, methyl pentane, hexane, heptane, octane, cyclohexane, methylcyclohexane and hydrogenated naphtha. More preferably unsubstituted C₆-₁₀-hydrocarbon solvents are used.

Also other components may be added into the reactor. It is known to feed hydrogen into the reactor for controlling the molecular weight of the polymer formed during the polymerisation. Also the use of different antifouling compounds is known in the art. In addition different kinds of activity boosters or activity retarders may be used for controlling the activity of the catalyst.

The polymer is formed in the solution polymerisation process, for instance, due to the contacting of the monomer and the comonomer with the polymerisation catalyst. The conditions in the reactor are such that the polymer is dissolved in the solvent. Typically the content of the polymer in the solution comprising the solvent, the polymer and the unreacted monomer and comonomer is from 10 to 50 % by weight, preferably from 10 to 40 % by weight, more preferably from 10 to 35 % by weight, such as from 10 to 30 % by weight.

The volatile hydrocarbons are removed from the polymer solution in one or more flash stages which are conducted in one or more flash vessels. In the flash stage the pressure is reduced and thereby the volatile hydrocarbons evaporate from the solution. It is also possible to increase the temperature of the solution stream upstream of the flash vessel for further enhancing the evaporation of hydrocarbons.

It is also possible to conduct the polymerisation in slurry. When the polymerisation is conducted in slurry the polymer particles formed in the polymerisation, together with the catalyst fragmented and dispersed within the particles, are suspended in the fluid hydrocarbon. The slurry is agitated to enable the transfer of reactants from the fluid into the particles.

The temperature in the slurry polymerisation is typically from 50 to 110 °C, preferably from 60 to 100 °C and in particular from 65 to 95 °C. The pressure is from 1 to 150 bar, preferably from 10 to 100 bar.

The slurry polymerisation may be conducted in any known reactor used for slurry polymerisation. Such reactors include a continuous stirred tank reactor and a loop reactor. It is especially preferred to conduct the polymerisation in loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

When the polymerisation is conducted in gas phase it may be conducted in a fluidised bed reactor, in a fast fluidised bed reactor or in a settled bed reactor or in any combination of these. Preferably, the polymerisation is conducted in a fluidised bed reactor. In a fluidised bed gas phase reactor propylene is copolymerised in the presence of the polymerisation catalyst in an upwards moving gas stream. The reactor typically contains a fluidised bed comprising the growing polymer particles containing the active catalyst located above a gas distribution grid.

The polymer bed is fluidised with the help of the fluidisation gas comprising propylene, comonomer(s), eventual chain growth controllers or chain transfer agents, such as hydrogen, and eventual inert gas. The fluidisation gas is introduced into an inlet chamber at the bottom of the reactor. To make sure that the gas flow is uniformly distributed over the cross-sectional surface area of the inlet chamber the inlet pipe may be equipped with a flow dividing element as known in the art, e.g. US-A-4933149 and EP-A-684871. One or more of the above-mentioned components may be continuously added into the fluidisation gas to compensate for losses caused, among other, by reaction and product withdrawal.

From the inlet chamber the gas flow is passed upwards through the gas distribution grid into the fluidised bed. The purpose of the gas distribution grid is to divide the gas flow evenly through the cross-sectional area of the bed. Sometimes the gas distribution grid may be arranged to establish a gas stream to sweep along the reactor walls, as disclosed in WO-A-2005/087361. Other types of gas distribution grids are disclosed, among others, in US-A-4578879, EP 600414 and EP-A-721798. An overview is given in Geldart and Bayens: The Design of Distributors for Gas fluidised Beds, Powder Technology, Vol. 42, 1985.

The fluidisation gas passes through the fluidised bed. The superficial velocity of the fluidisation gas must be higher that minimum fluidisation velocity of the particles contained in the fluidised bed, as otherwise no fluidisation would occur. On the other hand, the velocity of the gas should be lower than the onset velocity of pneumatic transport, as otherwise the whole bed would be entrained with the fluidisation gas. The minimum fluidisation velocity and the onset velocity of pneumatic transport can be calculated when the particle characteristics are known by using common engineering practise. An overview is given, among others in Geldart: Gas Fluidisation Technology, J.Wiley & Sons, 1986.

Typically the fluidised bed polymerisation reactor is operated at a temperature within the range of from 50 to 100 °C, preferably from 65 to 90 °C. The pressure is suitably from 10 to 40 bar, preferably from 15 to 30 bar.

The polymerisation catalyst may be any polymerisation catalyst being capable of producing the ethylene copolymer. Suitable catalysts are metallocene catalysts and Ziegler-Natta catalysts. Very useful catalysts in this respect are the metallocene catalysts having a ligand with a cyclopentadienyl structure, such as substituted or unsubstituted cyclopentadienyl, substituted or unsubstituted indenyl, substituted or unsubstituted tetrahydroindenyl and substituted or unsubstituted fluorenyl, connected to a transition metal atom, such as titanium, zirconium or hafnium atom. Suitable catalysts are disclosed, among others, in WO-A-87/07620, WO-A-5 92/21705, WO-A-93/11165, WO-A-93/11166, WO-A-93/19100, WO-A-97/36939, WO-A-98/12234, WO-A-99/33842, WO-A-03/000756, WO-A-03/000757, WO-A-03/000754, WO-A-03/000755, WO-A-2004/029112, EP-A-2610271, WO-A-2012/007430. WO-A-92/19659, WO-A-92/19653, WO-A-92/19658, US-A-4382019, US-A-4435550, US-A-4465782, US-A-4473660, US-A-4560671, US-A-5539067, US-A-5618771, EP-A-45975, EP-A-45976, EP-A-45977, WO-A-95/32994, US-A-4107414, US-A-4186107, US-A-4226963, US-A-4347160, US-A-4472524, US-A-4522930, US-A-4530912, US-A-4532313, US-A-4657882, US-A-4581342, US-A-4657882, EP-A-629631, EP-A-629632, WO-A-00/26266, WO-A-02/002576, WO-A-02/002575, WO-A-99/12943, WO-A-98/40331, EP-A-776913, EP-A-1074557, WO-A-99/42497, WO-A-95/12622, WO-A-96/32423, WO-A-97/28170, WO-A-98/32776, WO-A-99/61489, WO-A-15 03/010208, WO-A-03/051934, WO-A-03/051514, WO-A-2004/085499, EP-A-1752462 and EP-A-1739103.

The polymerisation of the ethylene copolymers is well known to the person skilled in the art, including the polymerisation processes and the catalysts used in them. Especially, the person skilled in the art is capable of controlling the density or comonomer content of the polymer by suitable addition of the comonomer and the molecular weight or the melt index by suitable addition of hydrogen.

It has been found that the process of the present invention is especially effective in improving the flow properties of pellets made of copolymers of ethylene with alpha-olefins having from 4 to 10 carbon atoms and where the ethylene copolymer has a density of not more than 915 kg/m³ preferably from 854 to 910 kg/m³. Furthermore, such ethylene copolymers have typically MFR₂ of from 0.2 to 50 g/10 min, preferably from 0.3 to 30 g/10 min.

### Extrusion and pelletisation

After the polymer is recovered from the polymerisation process it is degassed, mixed with additives and extruded as it is well known in the art. The extrusion is preferably conducted in a twin screw extruder. Suitable twin screw extruders are co-rotating twin screw extruders and counter-rotating twin screw extruders. Co-rotating twin screw extruders are manufactured, among others, by Coperion, KraussMaffei Berstorff and Japan Steel Works. Counter-rotating extruders are manufactured, among others, by Farrel, Kobe Industries and Japan Steel Works. The twin screw extruders and their operation are within the skill of the person skilled in the art.

The extruder typically comprises one or more feed ports into which the ethylene copolymer is introduced. Downstream of the feed port there is a melting zone and downstream of the melting zone one or more mixing zones. At the end of the extruder there is a die plate having a plurality of openings through which the molten plastic is extruded. The extruder may further comprise a screen pack with one or more screens for removing impurities or inhomogeneities. It may further comprise one or more gear pumps for generating sufficient pressure.

One or more conventional additives for improving the performance of the ethylene copolymer in the conversion process and end-use applications are added before or at the extrusion stage.
Typically the additives are introduced into the feed port of the extruder together with the ethylene copolymer. The conventional additives include antioxidants and process stabilisers, UV stabilisers, slip agents, antiblocking agents, acid scavengers and nucleating agents.

According to the method of the present invention the ethylene copolymer is extruded through a plurality of openings in the die plate into strands. After exiting the hole in the die plate the strand comes into contact with the water in the underwater pelletiser and is thereby cooled and solidified. The strand is then cut to pellets, typically by a number of rotating knives mounted close to the die plate. Usually the knives are mounted at the die plate so that the blade of the knife is in contact with the die plate. When the pellet is cut loose from the strand it is carried away with the pellet water stream creating a first pellet suspension stream and is thereby further cooled.

The temperature of the pellet water in the pelletiser is typically from 10 to 70 °C, depending on the density of the polymer grade. When extruding polymers having densities of 900 kg/m³ or below, the temperature of the pellet water is suitably kept between 10 and 30 °C. When density of polymer is above 900 kg/m³, the temperature of the pellet water is suitably kept between 30 and 50 °C. The pressure is not critical and can be selected based on the needs, such as from 1 to 10 bar (absolute pressure).

The weight ratio of pellets to water is typically from 0.1/100 to 5/100, preferably from 0.2/100 to 2/100. For instance, ratios within the range of from 0.25/100 to 1/100 have given good results.

After the underwater pelletiser, the first pellet suspension stream is passed to a first pellet separator where the pellet suspension stream is concentrated thereby producing a concentrated pellet stream and a first water stream. The first water stream is passed back to the underwater pelletiser.

One suitable way of removing the pellets from the pellet water is by using a rotating / spinning separator. There the pellet slurry is put into a rotating motion. The liquid is pressed through a screen at the outer periphery of the rotating dryer while the pellets are trapped inside. Any other suitable liquid/solid separators may be used.

Another suitable way of removing pellets from the pellet water is by using a sieve. In a sieve, the water is separated from the solid particles continuously to a separate stream. Pellet water is recirculated back to the pelletiser in a closed system. Moist particles are withdrawn continuously via a separate sloped sieve or curved sieve which retains pellets on top while allowing pellet water to flow down and routes the retained pellets away from pellet water stream.

### Process downstream of pelletisation

After the first pellet separator, the concentrated pellet stream is passed to a first vessel, which contains water. The concentrated pellet stream is mixed in the presence of water thus creating a second pellet suspension stream. The second pellet suspension stream is then passed to a hydraulic conveying line.

In the prior art processes typically a pneumatic conveying system has been used for transportation of plastic pellets. The motive force for this transfer comes from a combination of pressure differential and the flow of air supplied by an air mover, such as a blower or fan. By controlling the pressure or vacuum and the flow of air inside the conveying line, the system can successfully convey materials. Although commonly used, pneumatic conveying has some drawbacks. Especially with softer polymer grades, pneumatic conveying will cause formation of streamers and agglomeration. Also higher density grades suffer from attrition of polymer dust.

Hydraulic conveying provides a gentle and efficient method for conveying plastic pellets. In hydraulic conveying the pellets are transported as water slurry. In pneumatic conveying systems air velocity changes during the length of the conveying pipe due to pressure differences in conveying medium i.e. air. Water as the conveying medium in hydraulic conveying is not compressible. This means that the water velocity is constant throughout the entire conveying line.

In the present invention a further improvement is achieved by using cooled water in the hydraulic conveying line. Long conveying lines may heat up due to process conditions or ambient conditions unless the temperature of conveying water is controlled. Heat capacity of water enables longer conveying distances and reduces potential of pluggages. Additionally, the amount of streamers is reduced thereby making the elutriators unnecessary. It is preferred to keep the temperature of the conveying water low, for instance, within the range of from 10 to 30 °C when the material to be transported has a low Vicat softening temperature, e.g. polyethylene having a low density, such as not more than 900 kg/m³.

The hydraulic conveying line transports the second pellet suspension stream to a second pellet separator, e.g. a sieve or any suitable liquid/solid separator, where the pellets are separated from water thus creating a second water stream and a dry pellet stream. The second water stream is passed back to the first vessel. The second pellet separator may comprise of two suitable pellet separators which are placed successively.

From the second pellet separator the dry pellet stream may be passed to a blender, optionally via a classifier. The classifier is used for separation of fines, whereas the agglomerates may be separated in the pellet separator. A pellet lot is collected in the blender. During the collection it is possible to withdraw one or more pellet streams from the blender and return them to the second pellet separator. This is done by combining the pellet stream(s) with a water stream thus producing a third pellet suspension stream. The third pellet suspension stream is conveying the pellets to the second pellet separator. The combination of the pellet stream(s) with the water stream can be done in a second vessel or simply injecting the pellet stream(s) into the water stream in a pipe.

In the present invention an antiblock is added to the pelletising water, the hydraulic conveying water, the dried pellets or to a combination of these.

The polyolefin pellets are coated with the antiblock. When the antiblock is in combination with the polyolefin material which is in molten state and in its end use, the processing conditions or quality of the product is not significantly affected. The antiblocks of the invention are small particle size powders. Since the range of antiblocks is broad, particle size of an antiblock may be between 1 nm to 400 µm.

In the present invention, silica is used as an antiblock, which may be colloidal silica.

Suitable antiblocks are available in the market by several companies. For instance Sigma-Aldrich, Cabot, Akzo Nobel, Nalco, Klebosol, Evonik, Nyacol and Grace supply different types of silica.

The antiblock can be added as dispersion or a dry powder depending on the feeding place. The antiblock is fed as a dispersion to the first or second pellet suspension stream or both of them. When adding the antiblock to the dried pellets, it can be fed as a dry powder or a dispersion. The antiblock may be added from one or several feeding places and combination of different antiblocks may be added.

The inventors have found out that minimum of 50 ppm of antiblock is needed on the surface of the pellets. Preferably the pellets contain minimum of 75 ppm of antiblock on their surface. More preferably the pellets contain minimum of 100 ppm of antiblock on their surface. Pellets having lower densities or lower Vicat softening temperatures need preferably more antiblock on their surface. The antiblock concentration in the water should be from 2 to 10 w-%, preferably from 2 to 5 w-%.

The silica used as an antiblock may be added to any of the previously mentioned feeding places. The inventors have found that a portion of the silica particles is incorporated onto the surface of the pellets. Furthermore, the antiblock particles are evenly distributed onto the pellet surfaces. Thereby the adhesion and agglomeration tendency of the pellets is substantially reduced. Silica also adheres to the pellets without any binding agent. The pellets behave well during transport and storage, and time needed, for instance, for packaging and shipping operations is greatly reduced. Furthermore, the process is simple as it can be conducted in existing apparatus without a need for further investment.

The present invention provides also a gentle method for homogenisation of a pellet lot. Normal blending by recirculation of pellets under pneumatic conveying causes formation of streamers and agglomeration. In the present invention the pellets are mixed and circulated in the presence of water which prevents formation of streamers and agglomeration. It is preferred to keep the temperature of the water low, for instance, within the range of from 10 to 30 °C when the material to be transported has a low Vicat softening temperature, e.g. polyethylene having a low density, such as not more than 900 kg/m³.

The present invention improves the flow of polymer pellets. It should be understood that even though the flow of the pellets treated according to the method of the present invention is improved compared with untreated pellets, the flow may anyway become poor if the pellets are stored for a long period close to or above the softening temperature of the polymer. It is therefore preferred to store the pellets below the softening temperature of the polymer. Therefore, preferably the pellets are stored at a temperature which is not greater than the Vicat softening temperature of the olefin copolymer. More preferably, the storage temperature is at least 4 °C lower than the Vicat softening temperature of the olefin copolymer.

Figure 1 is an exemplary representation of a post-extrusion process where pellets are transported by a hydraulic conveying system and are treated with an antiblock.

The polymer melt is passed from the extruder through a die plate into the underwater pelletiser (A) and is cut to pellets. Antiblock may be added to the underwater pelletiser (A) from the first antiblock feed vessel (C) through lines (2.1) and (2.3) into the line (1.3).The first pellet suspension stream carries the pellets along the line (1.1) into the first pellet separator (B). The first pellet separator (B) may be a sieve or any suitable liquid/solid separator or a combination of the above-mentioned device. In addition there may be an agglomerate catcher or a classifier screen either before or after the first pellet separator (B). In the first pellet separator (B) the pellet suspension stream is concentrated thus producing a concentrated pellet stream and a first water stream substantially free of pellets. The first water stream is sent back to the underwater pelletiser through the lines (1.2) and (1.3). The concentrated pellet stream is collected along the line (1.4) after which it is sent to the first vessel (D) and mixed with water thereby creating a second pellet suspension stream. Antiblock may be added to the vessel (D) from an antiblock feed vessel (G) through the lines (3.1), (3.3), (3.4), the pellet water buffer vessel (F) and the lines (1.7) and (1.8). The second pellet suspension stream is carried along the hydraulic conveying line (1.5) to the second pellet separator (E). The second pellet separator (E) may comprise of two suitable liquid/solid separators which are placed successively. In the second pellet separator (E) the pellets are separated from the water thereby creating a second water stream and a dry pellet stream. The second water stream is collected along the line (1.6) to the pellet water buffer tank (F) after which it is directed back to the first vessel (D) along the lines (1.7) and (1.8). Suitably the water stream is cooled, for instance in a heat exchanger. The dry pellet stream is passed via the lines (1.10) and (1.11) to the classifier (H). From the classifier (H) the pellets are collected to the blender (I) through the line (1.12). It is also possible to design the process so that the dry pellets are passed from the second pellet separator (E) either directly to the blender (I) or the classifier (H). Antiblock may be added from the antiblock feed vessel (G) to the classifier (H) along the lines (3.1), (3.3), (3.5) and (1.11) or to the blender (I) along the lines (3.1), (3.3), (3.6) and (1.16).

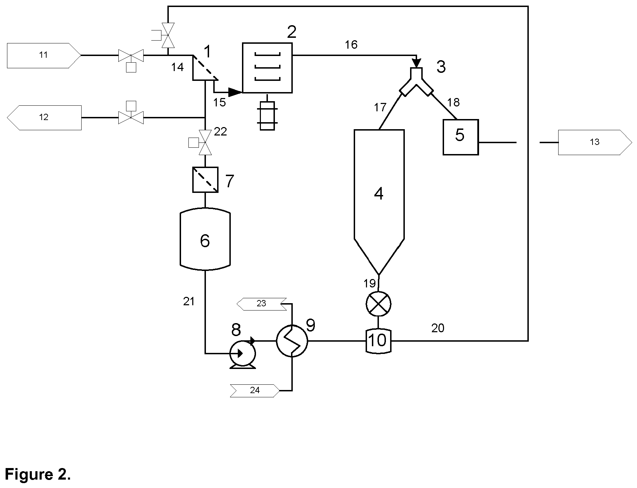

Figure 2 is an exemplary representation of the method for blending pellets in presence of water. Pellets and water are transported along the hydraulic conveying line as the second pellet suspension stream (11) and the line (14) to the dewatering device (1), which can be, for instance, a sieve. From the dewatering device (1) the pellets are passed via line (15) to the second pellet separator (2) where the pellets are separated from the remaining water stream thereby producing the dry pellet stream. The second pellet separator can be a spinning separator or any other suitable liquid/solid separator. It is possible to have a combination of different types pellet separators in place of (1) and (2) and in addition also extra device before or after them. The dry pellet stream is then collected along the line (16) either to the blender (4) or to the classifier (5). From the blender (4) the dry pellets are passed either to the second vessel (10) where they are mixed with water or to the line (20) thereby producing the third pellet suspension stream. The third pellet suspension stream is passed back to the dewatering device (1).

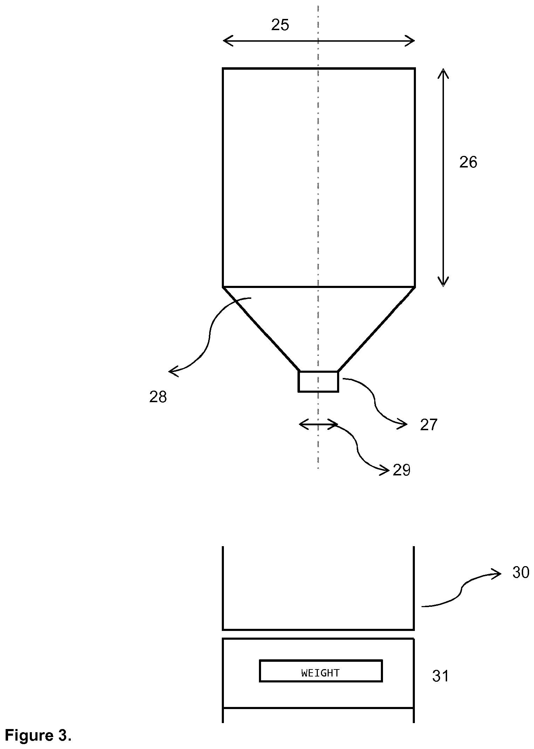

Figure 3 is a representation of the silo where the pellet flow measurements were made. The main body of the silo had a diameter (25) of 300 mm and a height (26) of 350 mm. The conical part (28) had an angle between the side of the cone and the horizontal plane of 50°. At the bottom of the cone there was an opening having the shape of a cylinder (27) where the diameter (29) of the cylindrical opening (27) was 50 mm.

The pellets were withdrawn from the silo into a container (30) standing on a balance (31) from where a continuous weight reading was collected. This allowed monitoring the emptying rate of the silo.

### Description of Methods

### Melt flow rate

Melt flow rate (MFR) was determined according to ISO 1133 at 190 °C. The load under which the measurement is conducted is given as a subscript. Thus, the MFR under the load of 2.16 kg is denoted as MFR₂. The melt flow rate MFR₂₁ is correspondingly determined at 190 °C under a load of 21.6 kg.

### Density

Density of the polymer was measured according to ISO 1183-1:2004 Method A on compression moulded specimen prepared according to EN ISO 1872-2 (Feb 2007) and is given in kg/m³.

### Vicat softening temperature

According to ISO 306, method A50, a flat-ended needle loaded with a mass of 10 N is placed in direct contact with an injection moulded test specimen with the dimensions of 80x10x4 mm³. The specimen and needle are heated at 50 °C/h. The temperature at which the needle has penetrated to a depth of 1 mm is recorded as the Vicat softening temperature.

### Pellet flow time

The flow time of polymer pellets was determined in the apparatus as shown in Figure 3. The silo was filled with pellets and maintained at a predetermined temperature (22 °C). After a predetermined time (24 hours) the pellets were removed from the silo by opening the cylindrical opening (27) at the bottom and allowing the pellets to flow through the opening. The pellets flowing from the silo through the opening (27) were collected to the container (30) and the weight reading of the balance (31) was recorded as function of time. No other action than opening the bottom outlet (27) was done to facilitate the withdrawal of pellets.

### Total solid content (determination of silica in dispersion)

A known volume of dispersion sample is taken in a non-porous dried container of known weight. The container with the dispersion sample is placed in a hot air oven to evaporate the liquids at a controlled temperature of 90°C +/- 5°C. After sufficiently long duration, the liquid in the dispersion is evaporated and solids are left behind in the container. The container with the solids is cooled to room temperature in a desiccator for 24 h under vacuum. Once cooled, the weight of the container and solids is determined. The drying, cooling and weighing steps are repeated until a constant weight is obtained. From the weight of the solids remaining and the initial volume of the solid suspension, the weight-% of solids can be determined.

### Inductively Coupled Plasma - Optical Emission Spectrometer

Approximately 50 g of polymer sample is sampled into a platinum crucible and exact weight recorded. The sample is dry ashed and further digested in a microwave furnace at 750 °C for 30 min. When cooled, the ash is moistened with a small amount of freshly deionised water (DI). The moistened ash is then dissolved in nitric acid (5 % HNO³) and heated on a sand bath. The acid solutions and potential residues are transferred to volumetric flaks using DI for rinsing. The solutions are further treated with hydrofluoric acid (3 % HF) and diluted with DI up to the final volume (25 ml) and left to stabilise for two hours.

The elemental analysis of the aqueous samples are run at room temperature using a Thermo Elemental iCAP 6300 Inductively Coupled Plasma - Optical Emission Spectrometer (ICP-OES). The instrument is calibrated for Si using a blank (a solution of 5% HNO₃ and 3% HF) and standards of 0.1 ppm, 1 ppm, 10 ppm, 50 ppm, 100 ppm and 300 ppm Si in solutions of 5% HNO₃ and 3% HF. Immediately before analysis the calibration is verified and adjusted using the blank and 100 ppm standard. A quality control sample (QC; 20 ppm in a solution 5% HNO₃ and 3% HF in DI) is also run.

The content of Si is monitored using the 251.611 nm and 288.158 nm line. The reported values are an average of three successive aliquots taken from the same sample and are related back to the original polymer sample by inputting the original mass and the dilution volume into the software.

### Examples

In all examples the polymer was a copolymer of ethylene and 1-octene which had been produced in solution polymerisation process in a single polymerisation reactor by using a metallocene catalyst. The polymer had a density of 866 kg/m³ and a melt flow rate MFR₂ of 0.5 g/10 min. Further, the polymer had a melting temperature of 53 °C and a Vicat softening temperature of 37 °C.

### Example 1

The polymer melt was passed from the ZSK32 MC twin screw extruder supplied by Coperion through a die plate into the underwater pelletiser and was cut to pellets. 10t/h of pellets were carried with 150t/h of pellet water stream creating the first pellet suspension stream. The first pellet suspension stream was carried along the line into the first pellet separator being a sieve. In the sieve the pellet suspension stream was concentrated thus producing the concentrated pellet stream and the first water stream. The first water stream was sent back to the underwater pelletiser. The concentrated pellet stream, 10t/h of pellets were passed to the line together with remaining water of 0.5t/h after which they were sent to the first vessel and mixed with water creating the second pellet suspension stream. Water stream of 50t/h carried the pellets of 10t/h along the hydraulic conveying line to the second pellet separator being a spinning separator. The pellets were separated from water thus creating a second water stream and a dry pellet stream. The second water stream, 49.995 t/h, was sent back to the first vessel. After that the dry pellet stream was passed to the classifier. The dry pellet stream of 10t/h with remaining water of 5kg/h were sent to the blender.

### Example 2

Silica supplied by Cabot having an average particle size less than 200 µm and 30 L of water having a pH of 6.5 were mixed in a vessel. The temperature of the water was kept at 12 °C. The silica was in the form of 30% stable dispersion. Final silica concentration in water was 5% by weight. The silica concentration was confirmed by a gravimetric method. 1kg of PE pellets were added to the water containing silica and mixed for 15 seconds. The pellets were separated from the water and dried in air. The silica coated dried PE pellets were analysed by ICP-OES method and the pellets were found to contain 110 ppm of silica on them.

### Example 3

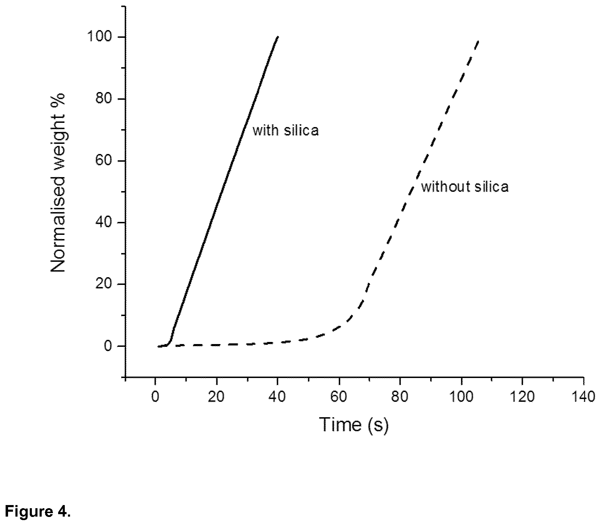

The polymer of Example 2 and a reference polymer which had similar properties but without silica coating were subjected to a flow test in the silo of Figure 3 at 22 °C. The amount of pellets was ca. 10 kg in both cases. The results are shown in Figure 4.

In Figure 4 the portion of material flown out of the silo is shown as a function of time.

The figure shows the effect of treating the pellets with silica. It can be seen that untreated polymer pellets are withdrawn from the silo in about 110 seconds (the line on the left in the figure). When the silica treated pellets containing 111 ppm of silica on their surface are withdrawn from the silo, the required time is about 40 seconds (the line on the right in the figure). The figure clearly shows that silica treated pellets flow more smoothly than the untreated pellets. The untreated pellets stay in the silo for 60 seconds after opening of the cylindrical opening (27) and only after that they start to flow. Also the required emptying time is longer with the untreated pellets.

## Claims

1. A process for hydraulic conveying of pellets of polyolefins, comprising the steps of: (i) extruding molten polyolefin into strands and cutting the strands into pellets in an underwater pelletiser (A); (ii) withdrawing a first pellet suspension stream from the underwater pelletiser (A); (iii) concentrating the first pellet suspension stream in a first pellet separator (B) thereby producing a concentrated pellet stream and a first water stream substantially free of pellets and passing the first water stream back to the underwater pelletiser (A); (iv) passing the concentrated pellet stream to a hydraulic conveying line (1.5) through a first vessel (D) and mixing it with water thereby producing a second pellet suspension stream; (v) withdrawing the second pellet suspension stream from the first vessel (D) and passing it to a second pellet separator (E); (vi) separating the pellets from water in the second pellet separator (E) thereby creating a second water stream and a dry pellet stream and passing the second water stream back to the first vessel (D); **characterised in that** i the polyolefin is a copolymer of ethylene having a density of 915 kg/m³ or less, measured according to ISO 1183-1:2004 Method A on compression moulded specimen prepared according to EN ISO 1872-2 (Feb 2007), and **in that** any one of (1) the first pellet suspension stream, (2) the second pellet suspension stream or (3) the dry pellet stream comprises an antiblock, wherein the antiblock is silica.

2. The process according to claim 1 wherein the antiblock is fed as a dispersion to at least one of (1) the first pellet suspension stream or (2) the second pellet suspension stream.

3. The process according to claim 2 wherein the antiblock is fed to water and the water contains from 2 to 10 % by weight of the antiblock, preferably from 2 to 5 % by weight of the antiblock, based on the weight of the water.

4. The process according to any one of the preceding claims comprising the additional step of (vii) passing the dry pellet stream to a blender (I) or to a classifier (H).

5. The process according to claim 4 comprising the additional steps of: (viii) withdrawing multiple streams of pellets from different heights of the blender (I); (ix) passing the pellets to a water stream thus forming a third pellet suspension stream; and (x) returning the third pellet suspension stream to the step (vi) of separating the pellets from the water.

6. The process according to claim 5 comprising the additional step of: (ix-a) passing the pellets to a second vessel containing water and mixing them in the presence of water thereby creating a third pellet suspension stream; and (x) returning the third pellet suspension stream to the step (vi) of separating the pellets from the water.

7. The process according to any one of the preceding claims comprising the step of cooling at least one of the first water stream and the second water stream.

8. The process according to claim 7 comprising the step of cooling at least one of the first water stream and the second water stream to a temperature within the range of from 10 °C and 30 °C; and wherein the polyolefin is a copolymer of ethylene having density of not more than 900 kg/m³, measured according to ISO 1183-1:2004 Method A on compression moulded specimen prepared according to EN ISO 1872-2 (Feb 2007).

9. The process according to claim 7 comprising the step of cooling at least one of the first water stream and the second water stream to a temperature within the range of from 30 °C to 70 °C, preferably from 30 °C to 50 °C; and wherein the polyolefin is a copolymer of ethylene having density greater than 900 kg/m³, measured according to ISO 1183-1:2004 Method A on compression moulded specimen prepared according to EN ISO 1872-2 (Feb 2007).

## Patentansprüche

1. Verfahren zur hydraulischen Förderung von Pellets aus Polyolefinen, umfassend die Schritte: (i) Extrudieren von geschmolzenem Polyolefin zu Strängen und Schneiden der Stränge zu Pellets in einer Unterwassergranuliervorrichtung (A); (ii) Abziehen eines ersten Pellet-Suspensionsstroms aus der Unterwassergranuliervorrichtung (A); (iii) Konzentrieren des ersten Pellet-Suspensionsstroms in einem ersten Pelletabscheider (B), wodurch ein konzentrierter Pelletstrom und ein erster Wasserstrom, der im Wesentlichen frei von Pellets ist, erzeugt werden, und Zurückleiten des ersten Wasserstroms zu der Unterwassergranuliervorrichtung (A); (iv) Leiten des konzentrierten Pelletstroms zu einer hydraulischen Förderleitung (1.5) durch einen ersten Behälter (D) und Mischen desselben mit Wasser, wodurch ein zweiter Pellet-Suspensionsstrom erzeugt wird; (v) Abziehen des zweiten Pellet-Suspensionsstroms aus dem ersten Behälter (D) und Leiten desselben zu einem zweiten Pelletabscheider (E); (vi) Abscheiden der Pellets von dem Wasser in dem zweiten Pelletabscheider (E), wodurch ein zweiter Wasserstrom und ein trockener Pelletstrom erzeugt werden, und Leiten des zweiten Wasserstroms zurück zu dem ersten Behälter (D); **dadurch gekennzeichnet, dass** das Polyolefin ein Copolymer von Ethylen ist, das eine Dichte von 915 kg/m³ oder weniger aufweist, gemessen gemäß ISO 1183-1:2004 Verfahren A an einer formgepressten Probe, die gemäß EN ISO 1872-2 (Februar 2007) hergestellt wurde; und dadurch, dass einer von (1) dem ersten Pellet-Suspensionsstrom, (2) dem zweiten Pellet-Suspensionsstrom oder (3) dem trockenen Pelletstrom einen Antiblock umfasst, wobei der Antiblock Siliciumdioxid ist.

2. Verfahren nach Anspruch 1, wobei der Antiblock als Dispersion mindestens einem von (1) dem ersten Pellet-Suspensionsstrom oder (2) dem zweiten Pellet-Suspensionsstrom zugeführt wird.

3. Verfahren nach Anspruch 2, wobei der Antiblock dem Wasser zugeführt wird und das Wasser 2 bis 10 Gew.-% Antiblock, vorzugsweise 2 bis 5 Gew.-% Antiblock, bezogen auf das Gewicht des Wassers, enthält.

4. Verfahren nach einem der vorangegangenen Ansprüche, umfassend den zusätzlichen Schritt (vii) des Leitens des trockenen Pelletstroms zu einem Mischer (I) oder zu einem Klassierer (H).

5. Verfahren nach Anspruch 4, umfassend die folgenden zusätzlichen Schritte: (viii) Abziehen mehrerer Ströme von Pellets aus verschiedenen Höhen des Mischers (I); (ix) Leiten der Pellets zu einem Wasserstrom, wodurch ein dritter Pellet-Suspensionsstrom gebildet wird; und (x) Rückführen des dritten Pellet-Suspensionsstroms zum Schritt (vi) des Abscheidens der Pellets von dem Wasser.

6. Verfahren nach Anspruch 5, umfassend die zusätzlichen Schritte: (ix-a) Leiten der Pellets in einen zweiten Behälter, der Wasser enthält, und Mischen der Pellets in Gegenwart von Wasser, wodurch ein dritter Pellet-Suspensionsstrom erzeugt wird; und (x) Rückführen des dritten Pellet-Suspensionsstroms in den Schritt (vi) des Abscheidens der Pellets von dem Wasser.

7. Verfahren nach einem der vorangegangenen Ansprüche, umfassend den Schritt des Kühlens zumindest eines von dem ersten Wasserstrom und dem zweiten Wasserstrom.

8. Verfahren nach Anspruch 7, umfassend den Schritt des Kühlens zumindest eines von dem ersten Wasserstrom und dem zweiten Wasserstrom auf eine Temperatur im Bereich von 10 °C und 30 °C; und wobei das Polyolefin ein Copolymer von Ethylen ist, das eine Dichte von nicht mehr als 900 kg/m³ aufweist, gemessen gemäß ISO 1183-1:2004 Verfahren A an einer formgepressten Probe, die gemäß EN ISO 1872-2 (Februar 2007) hergestellt wurde.

9. Verfahren nach Anspruch 7, umfassend den Schritt des Kühlens zumindest eines des ersten Wasserstroms und des zweiten Wasserstroms auf eine Temperatur im Bereich von 30 °C bis 70 °C, vorzugsweise von 30 °C bis 50 °C; und wobei das Polyolefin ein Copolymer von Ethylen ist, das eine Dichte von mehr als 900 kg/m3 aufweist, gemessen gemäß ISO 1183-1:2004 Verfahren A an einer formgepressten Probe, die gemäß EN ISO 1872-2 (Februar 2007) hergestellt wurde.

## Revendications

1. Procédé de transport hydraulique de granulés de polyoléfines,
comprenant les étapes de : (i) extrusion d'une polyoléfine fondue en brins et découpe des brins en granulés dans un granulateur subaquatique (A) ; (ii) retrait d'un premier flux de suspension de granulés du granulateur subaquatique (A) ; (iii) concentration du premier flux de suspension de granulés dans un premier séparateur de granulés (B) produisant ainsi un flux de granulés concentrés et un premier flux d'eau sensiblement exempt de granulés et renvoi du premier flux d'eau vers le granulateur subaquatique (A) ; (iv) passage du flux de granulés concentrés dans une ligne de transport hydraulique (1.5) à travers un premier récipient (D) et son mélange avec de l'eau produisant ainsi un deuxième flux de suspension de granulés ; (v) retrait du deuxième flux de suspension de granulés du premier récipient (D) et son passage dans un second séparateur de granulés (E) ; (vi) séparation des granulés de l'eau dans le second séparateur de granulés (E) créant ainsi un second flux d'eau et un flux de granulés secs et renvoi du second flux d'eau vers le premier récipient (D) ; **caractérisé en ce que**: la polyoléfine est un copolymère d'éthylène ayant une densité de 915 kg/m³ ou moins, mesurée selon la norme ISO 1183-1:2004 Méthode A sur un échantillon moulé par compression préparé selon la norme EN ISO 1872-2 (Fév. 2007) et **en ce que** l'un quelconque (1) du premier flux de suspension de granulés, (2) du deuxième flux de suspension de granulés ou (3) du flux de granulés secs comprend un anti-adhérent, dans lequel l'anti-adhérent est de la silice.

2. Procédé selon la revendication 1 dans lequel l'anti-adhérent est alimenté sous forme de dispersion à au moins l'un (1) du premier flux de suspension de granulés ou (2) du deuxième flux de suspension de granulés.

3. Procédé selon la revendication 2 dans lequel l'anti-adhérent est alimenté à de l'eau et l'eau contient de 2 à 10 % en poids de l'anti-adhérent, de préférence de 2 à 5 % en poids de l'anti-adhérent, sur la base du poids de l'eau.

4. Procédé selon l'une quelconque des revendications précédentes comprenant l'étape supplémentaire de (vii) passage du flux de granulés secs sur un mélangeur (I) ou sur un classificateur (H).

5. Procédé selon la revendication 4 comprenant les étapes supplémentaires de : (viii) retrait de multiples flux de granulés de différentes hauteurs du mélangeur (I) ; (ix) passage des granulés dans un flux d'eau formant ainsi un troisième flux de suspension de granulés ; et (x) renvoi du troisième flux de suspension de granulés à l'étape (vi) de séparation des granulés de l'eau.

6. Procédé selon la revendication 5 comprenant l'étape supplémentaire de : (ix-a) passage des granulés dans un second récipient contenant de l'eau et leur mélange en présence d'eau créant ainsi un troisième flux de suspension de granulés ; et (x) renvoi du troisième flux de suspension de granulés à l'étape (vi) de séparation des granulés de l'eau.

7. Procédé selon l'une quelconque des revendications précédentes comprenant l'étape de refroidissement d'au moins l'un du premier flux d'eau et du second flux d'eau.

8. Procédé selon la revendication 7 comprenant l'étape de refroidissement d'au moins l'un du premier flux d'eau et du second flux d'eau à une température comprise dans la plage allant de 10 °C à 30 °C ; et dans lequel la polyoléfine est un copolymère d'éthylène ayant une densité de pas plus de 900 kg/m³, mesurée selon la norme ISO 1183-1:2004 Méthode A sur un échantillon moulé par compression préparé selon la norme EN ISO 1872-2 (Fév. 2007).

9. Procédé selon la revendication 7 comprenant l'étape de refroidissement d'au moins l'un du premier flux d'eau et du second flux d'eau à une température comprise dans la plage allant de 30 °C à 70 °C, de préférence de 30 °C à 50 °C ; et dans lequel la polyoléfine est un copolymère d'éthylène ayant une densité de plus de 900 kg/m³, mesurée selon la norme ISO 1183-1:2004 Méthode A sur un échantillon moulé par compression préparé selon la norme EN ISO 1872-2 (Fév. 2007).
